# DEMANDE DE BREVET EUROPEEN

(11) **EP 0 961 473 A1**
(43) Date de publication de la demande: **01.12.1999**
(21) Numéro de dépôt: 99401213.6
(22) Date de dépôt: 20.05.1999
(51) Int. Cl.: H04N 1/00

(54) **Procédé d'analyse optique d'un document**

(30) Priorité: 26.05.1998 FR 9806592
(71) Demandeur: SAGEM SA, 75116 Paris (FR)
(72) Inventeur: Ciccone, Jean-Michel, 95520 Osny (FR)
(74) Mandataire: Bloch, Gérard

(57) **Abrégé**

Dans le procédé d'analyse optique d'un document (20), au moyen d'un capteur optique (1) fournissant des données d'image de pixels du document (20) fonction d'intensités optiques détectées par le capteur (1), on détecte l'arrivée du bord antérieur du document (20) dans une zone en amont du capteur (1) et on bloque temporairement toute avance du document (20) pour effectuer, préalablement à l'analyse du document (20), une analyse d'une mire (2) d'intensité optique de référence et, si le résultat de l'analyse ne correspond pas à un résultat escompté, on engendre une alarme (12).

L'invention s'applique bien aux télécopieurs.

## Description

La présente invention a pour origine le problème de la qualité d'analyse optique d'un document dans un télécopieur et donc de la télécopie restituée.

Le dispositif d'analyse d'un télécopieur peut comporter une barrette de détecteurs optiques élémentaires devant laquelle défile une feuille de document dont l'image est à transmettre, feuille plaquée sur la barrette par un rouleau de laminoir opposé à celle-ci, pour l'analyser ligne par ligne et obtenir l'image sous forme de pixels. Le rouleau est blanc, afin de servir aussi de référence optique pour étalonner la sensibilité des détecteurs. Cependant, si des particules de poussière polluent le rouleau ou la barrette, la référence optique se trouve localement faussée et l'image restituée par le télécopieur destinataire comporte alors, pour chaque détecteur ponctuel affecté par un défaut, toute une colonne de pixels dont le niveau de gris ne correspond pas à celui du document d'origine.

Cela forme des traînées verticales très visibles qui dégradent fortement la qualité de la télécopie.

U.S. 4 827 351 enseigne d'effectuer, préalablement à l'analyse du document, une analyse d'une mire d'intensité optique de référence et, si le résultat de l'analyse ne correspond pas à un résultat escompté, on engendre une alarme.

Ainsi, un utilisateur est informé de la présence de pollutions et peut alors procéder à un nettoyage avant l'analyse du document. Cependant, cette analyse doit être exécutée en permanence, afin que le dispositif d'analyse soit toujours réglé correctement et puisse donc analyser un document à tout moment.

Cette analyse permanente représente une charge de travail pour les circuits de gestion du télécopieur et en accroît la consommation.

La présente invention vise a éviter ces inconvénients, dans un télécopieur ou tout autre appareil à lecteur optique.

A cet effet, l'invention concerne un procédé d'analyse optique d'un document au moyen d'un capteur optique agencé pour fournir des données d'image de pixels du document fonction d'intensités optiques détectées par le capteur, procédé dans lequel on effectue, préalablement à l'analyse du document, une analyse d'une mire d'intensité optique de référence et, si le résultat de l'analyse ne correspond pas à un résultat escompté, on engendre une alarme, caractérisé par le fait qu'on détecte l'arrivée du bord antérieur du document dans une zone en amont du capteur et on bloque temporairement toute avance du document pour analyser préalablement la mire.

Ainsi, l'analyse de la mire est uniquement déclenchée, ou synchronisée, par l'arrivée du document et c'est donc ce dernier qui commande, préalablement à son analyse, un calibrage optique du capteur.

On notera que l'invention s'applique à tout capteur, qu'il s'agisse d'un capteur noir et blanc ou d'un capteur couleur.

Avantageusement, si la surface de référence est un rouleau de contre-appui d'un laminoir de tirage de documents à analyser par le capteur, on fait tourner le rouleau pour en analyser préalablement la surface, avant d'avancer un document jusqu'au capteur.

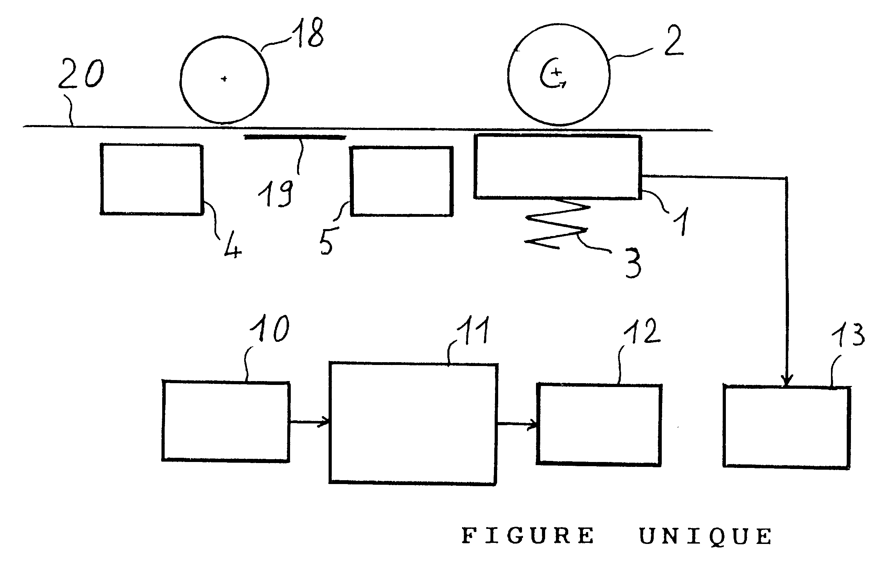

L'invention sera mieux comprise à l'aide de la description suivante d'un mode de mise en oeuvre préféré du procédé de l'invention, en référence à la figure unique, qui représente schématiquement un analyseur optique de télécopieur pour la mise en oeuvre du procédé de l'invention.

L'analyseur optique de télécopieur représenté comporte un dispositif capteur optique 1 d'analyse, ligne par ligne, d'une feuille 20 d'un document. Le dispositif optique 1 est ici du type à contact, CIS, mais il aurait pu être une barrette d'un circuit à transfert de charges, CCD, associée à une optique de focalisation. Une mémoire 13 est alimentée en données d'image numérisée, ou pixels, par le dispositif d'analyse 1.

Le dispositif d'analyse 1 est plaqué par un ressort 3 sur un rouleau de contre-appui 2. En amont du dispositif d'analyse 1 et du rouleau 2 se trouve un guide 19 pour guider la feuille 20 jusqu'au dispositif d'analyse 1, depuis une fente d'introduction, non représentée. Sur le trajet correspondant au guide 19 se trouve un galet chargeur 18 de saisie de la feuille 20, qui, commandé par un détecteur 4 de présence de feuille, de détection d'un bord antérieur de feuille 20, entraîne la feuille 20 pour la faire défiler entre le dispositif d'analyse 1 et le rouleau 2, qui est ici motorisé.

Entre le détecteur 4 et le dispositif d'analyse 1 associé au rouleau 2 se trouve un autre détecteur, 5, de début d'analyse, détectant le bord antérieur de la feuille 20.

L'ensemble des circuits ci-dessus est commandé par, et/ou commande, une unité centrale à microprocesseur 11 à fonctionnement rythmé par une base de temps 10 et commandant un afficheur 12. L'unité centrale 11 est reliée aux divers capteurs et commande les circuits ci-dessus, par des liaisons non représentées.

Le fonctionnement des circuits d'analyse optique ci-dessus va maintenant être expliqué.

Lorsqu'un utilisateur introduit le bord antérieur d'une feuille 20 à analyser dans la fente ci-dessus, le détecteur 4 le détecte et transmet l'information à l'unité centrale 11. Celle-ci commande alors la rotation du galet de chargement 18, qui entraîne le bord antérieur de la feuille 20 jusqu'au détecteur 5. Ce dernier commande alors, à travers l'unité centrale 11, l'arrêt du galet 18, pour bloquer temporairement toute avance de la feuille 20 afin d'effectuer un test optique au niveau du dispositif d'analyse 1.

Ce test vise en particulier à étalonner ou calibrer les divers capteurs élémentaires du dispositif d'analyse 1 en fonction de l'intensité optique, c'est-à-dire déterminer au moins un point de référence sur leur courbe de réponse.

Ici, la référence choisie est le blanc, c'est-à-dire l'intensité maximale à détecter lorsqu'il s'agit d'une surface analysée envoyant au dispositif d'analyse 1 un maximum de lumière, lorsqu'elle est éclairée par une source optique, non représentée.

La surface analysée de référence, ou mire, est ici le rouleau 2, dont on prend l'image de la génératrice alors opposée au dispositif d'analyse 1 pour la mémoriser en mémoire 13. On prend ici toute l'image de la surface d'appui du rouleau 2 pour vérifier qu'elle ne comporte pas de zone(s) grises(s), voire noire(s). De telles zones grises pourraient en outre, par transparence à travers la feuille 20, induire des défauts dans l'image détectée, ou être directement visibles si la feuille 20 est de largeur réduite.

On remarquera que la seule vérification d'une génératrice du rouleau 2 permet aussi de détecter toute pollution présente sur le dispositif d'analyse 1, qui induirait donc un défaut sur une ou plusieurs colonne(s) de l'image captée.

L'unité centrale 11 effectue le contrôle de la qualité de l'image captée (13) en comparant la représentation numérique de l'intensité de chaque pixel à une valeur de seuil, en dessous de laquelle l'intensité détectée est insuffisante pour restituer un pixel blanc ou quasiment blanc.

En variante, il peut être prévu de comparer entre elles les intensités des divers pixels pour détecter celles qui diffèrent, d'au moins une valeur déterminée, de la majorité des intensités et qui indiquent ainsi la présence d'une pollution.

En cas de détection d'un défaut dans l'image de test, c'est-à-dire de discordance par rapport au résultat escompté, l'unité centrale 11 affiche (12) un message de défaut, ou d'alarme, invitant l'utilisateur à procéder au nettoyage du rouleau 2 et du dispositif d'analyse 1. Une alarme sonore, vocale, aurait pu être prévue.

Sinon, après le test ci-dessus, l'unité centrale 11 remet en rotation le galet 18 pour entraîner la feuille 20 jusqu'au dispositif d'analyse 1, afin d'analyser optiquement l'image de la feuille 20, de façon classique.

Comme indiqué, le rouleau 2 est ici moteur et il continue donc la rotation qu'il a entamée pour le test.

Différentes variantes peuvent être prévues.

Tout d'abord, la surface ou ligne de mire optique peut appartenir à un élément autre que le rouleau 2, en particulier dans le cas d'un capteur CCD avec une optique, au niveau de laquelle il peut être prévu un déflecteur pour temporairement relier optiquement au CCD une plaquette mire.

Par ailleurs, la référence d'intensité lumineuse peut être tout niveau déterminé de gris, ou même un niveau indéterminé mais homogène, ou au moins prévisible, sur toute la surface de la mire de test afin de pouvoir déceler toute inhomogénéité dans l'image détectée, comme expliqué plus haut.

On conçoit de même que le procédé s'applique aux détecteurs couleurs.

En ce qui concerne les éléments mécaniques, il peut en variante être prévu uniquement le détecteur 5 pour lancer le processus de test, avec une introduction manuelle de la feuille 20, sans prévoir le galet 18 et le détecteur associé 4.

En pareil cas, il peut être prévu de ne pas faire tourner le rouleau 2 dans la phase de test, afin d'éviter alors le passage du bord antérieur de la feuille 20 devant le dispositif d'analyse 1. Après le test, le rouleau 2 est alors mis en rotation pour entraîner la feuille 20.

Il peut encore être prévu un doigt de butée rétractable, entre le détecteur 5 et le dispositif d'analyse 1, pour bloquer toute avance de la feuille 20 lors de ce test, ce qui laisse toute liberté pour faire tourner le rouleau 2 lors de ce test.

## Revendications

1. Procédé d'analyse optique d'un document (20) au moyen d'un capteur optique (1) agencé pour fournir des données d'image de pixels du document (20) fonction d'intensités optiques détectées par le capteur (1), procédé dans lequel on effectue, préalablement à l'analyse du document (20), une analyse d'une mire (2) d'intensité optique de référence et, si le résultat de l'analyse ne correspond pas à un résultat escompté, on engendre une alarme (12), caractérisé par le fait qu'on détecte l'arrivée du bord antérieur du document (20) dans une zone en amont du capteur (1) et on bloque temporairement toute avance du document (20) pour analyser préalablement la mire (2).

2. Procédé selon la revendication 1, dans lequel, la surface de référence étant un rouleau (2) de contre-appui d'un laminoir de tirage de documents à analyser par le capteur (1), on fait tourner le rouleau (2) pour en analyser préalablement- la surface, avant d'avancer un document (20) jusqu'au capteur (1).

3. Procédé selon l'une des revendications 1 et 2, dans lequel on bloque temporairement le document (20) par arrêt d'un galet (18) de chargement de celui-ci.

4. Procédé selon la revendication 2, dans lequel on bloque temporairement le document (20) par interposition d'une butée rétractable en amont du capteur (1).
